Europäisches Patentamt

European Patent Office

Office européen des brevets

(11) Veröffentlichungsnummer: **0 671 231 A1**

## (12) EUROPÄISCHE PATENTANMELDUNG

(21) Anmeldenummer: **95103494.1**

(22) Anmeldetag: **10.03.95**

(51) Int. Cl.⁶: **B22F 3/10**, B22F 3/22

(30) Priorität: **11.03.94 DE 4408304**

(43) Veröffentlichungstag der Anmeldung:
**13.09.95 Patentblatt 95/37**

(84) Benannte Vertragsstaaten:
**AT BE CH DE ES FR GB IT LI NL**

(71) Anmelder: **BASF AKTIENGESELLSCHAFT**

**D-67056 Ludwigshafen (DE)**

(72) Erfinder: **Sterzel, Hans-Josef, Dr.**
**Wasgauring 3**
**D-67125 Dannstadt-Schauernheim (DE)**
Erfinder: **Wohlfromm, Hans, Dr.**
**Bahnhofstrasse 3**
**D-67059 Ludwigshafen (DE)**

(74) Vertreter: **Geissler, Bernhard, Dr.jur.,**
**Dipl.-Phys. et al**
**Patent- u. Rechtsanwälte Bardehle**
**-Pagenberg-Dost-Altenburg-**
**Frohwitter-Geissler & Partner**
**Galileiplatz 1**
**D-81679 München (DE)**

(54) **Sinterteile aus sauerstoffempfindlichen, nicht reduzierbaren Pulvern und ihre Herstellung über Spritzgiessen.**

(57) Die bevorzugten Sinterteile aus sauerstoffempfindlichen, nicht reduzierbaren Pulvern und ihre Herstellung durch Spritzgießen, zeichnen sich dadurch aus, daß die eingesetzten Pulver durch eine Attritormahlung in einem wasserfreien organischen Lösungsmittel, gegebenenfalls in Anwesenheit eines zusätzlichen Reduktionsmittels, von ihrer Oxidschicht befreit werden, die Oxidteilchen nötigenfalls durch Filtration oder Sichtung in Anwesenheit des organischen Lösungsmittels entfernt werden, das oxidfreie Pulver als Suspension mit einem Polyacetal als Binder unter einem Schutzgas vermischt wird, das organische Lösungsmittel abdestilliert wird, die Mischung aus Pulver und Polyacetal über den Schmelzpunkt des Polyacetals erhitzt und dabei zu einer homogenen Masse gekneten wird, das so erhaltene Granulat in einer mit Argon inertisierten Spritzgießmaschine zu Formkörpern verarbeitet wird, die Formkörper unter der Einwirkung von Oxalsäure in einem geschlossenen, jedoch Druckausgleich zulassenden Keramikbehälter unter Schutzgas bei Normaldruck oder vermindertem Druck entbindert werden, nach der Entbinderung die Formkörper in ihrem Behälter ohne Luftkontakt in einen Sinterofen überführt und darin nach dem Stand der Technik gesintert werden.

EP 0 671 231 A1

Das Pulverspritzgießverfahren wird zur Herstellung komplexer metallischer und keramischer Formteile eingesetzt. Sinterbare Metall- oder Keramikpulver werden mit einem organischen Binder vermischt, so daß der Volumenanteil an sinterbarem Pulver 40 bis 70% beträgt und die Masse bei erhöhten Temperaturen fließfähig ist. Der Compound wird im Plastifizierteil einer Spritzgießmaschine aufgeschmolzen und die Schmelze in das Werkzeug eingespritzt. Dort erstarrt die Schmelze, und nach 10 bis 200 Sekunden wird das Teil (Grünteil) entformt. Aus diesem Grünteil wird unter Erhalt der maßlichen Dimensionen der Binder, der nur zur Formgebung gebraucht wurde und später stört, entfernt.

Hierzu können verschiedene Methoden eingesetzt werden, nämlich die Pyrolyse, eine Kombination von Extraktion mit einem Lösungsmittel und nachfolgender Pyrolyse, die Extraktion mit überkritischem Kohlendioxid oder die Depolymerisation des Binders durch saure Gase, wenn als Binder ein Polyacetal eingesetzt wurde.

Als Ergebnis des Entbinderungsvorgangs erhält man stets ein mehr oder weniger fragiles Teil, das in etwa den gleichen Volumenanteil an Poren aufweist, den vor der Entbinderung der Binder eingenommen hatte.

Erst beim darauffolgenden Sintern schrumpft das Teil, wobei je nach Material Formkörper mit 92 bis 100% der theoretischen Dichte erhalten werden.

Nach der Spritzgießtechnologie können Teile auf der Basis keramischer Pulver wie $Al_2O_3$, $ZrO_2$, $Si_3N_4$, SiC hergestellt werden. Aber auch Metallteile auf der Basis von Eisen, Nickel, Kobalt mit Legierungselementen wie Chrom, Molybdän, Kupfer, Vanadium, Niob oder Wolfram lassen sich so herstellen.

Zwar sind die meisten dieser Metallpulver gegen Oxidation empfindlich und deswegen mit einer Oxidschicht überzogen, sie werden aber vorwiegend in einer wasserstoffhaltigen, reduzierenden Atmosphäre gesintert. Dadurch wird die Oxidschicht vor dem eigentlichen Sintern zum Metall reduziert. So wird vermieden, daß die Oxidschicht den Sintervorgang hemmt oder ganz verhindert.

Die Entfernung der Oxidschicht gelingt jedoch nicht, wenn Element- oder Legierungspulver gesintert werden sollen, die sich nicht mit Wasserstoff unter Bildung reduzierter Teile mit Wassergehalten entsprechend Taupunkten von größer als -70 °C reduzieren lassen. Derartige Elemente sind Magnesium, Aluminium, Silizium, Titan, Zirkonium oder Seltenerdmetalle. Große technische Bedeutung haben darunter die Metalle Titan, Silizium als Legierungsbestandteil von Eisen sowie Seltenerdmetalle als Legierungsbestandteile hochkoerzitiver Magnete auf der Basis von Samarium und Cobalt oder auf der Basis von Eisen, Neodym und Bor vorzugsweise $SmCo_5$, $Sm_2Co_{17}$ oder $Nd_2Fe_{14}B$. Diese Magnetmaterialien können noch kleinere Anteile von unter 10 Masse = Prozent der Gesamtmasse an anderen Elementen enthalten.

Für das Sintern von Fe/Si-Legierungen oder Titanpulver wurde als Abhilfe vorgeschlagen, die Reduktion mit Kohlenstoff, der aus dem Binder stammt, durchzuführen (EP 0 356 131 B1). Diese Vorgehensweise hat jedoch den Nachteil, daß der aus der Pyrolyse des Binders stammende Kohlenstoffgehalt genau der Menge des zu reduzierenden Oxids entsprechen muß. Schließlich wirkt sich überschüssiger Kohlenstoff mit Gehalten von wenigen zehntel Prozent bereits als stark versprödend aus. Auch hängt der Kohlenstoffgehalt aus dem Binder nicht nur vom ursprünglichen Bindergehalt ab sondern von einer Reihe weiterer Einflußparameter wie von Zusammensetzung und Korngröße des zu sinternden Pulvers, von der Wandstärke der Teile, vom Volumenanteil des Pulvers sowie, von der Heizrate bei der Binderpyrolyse. Diese vielen Einflüsse machen die Reduktion der Oxidschicht durch Kohlenstoff nicht praktikabel.

Führt man den Kohlenstoff als elementaren Kohlenstoff wie Ruß oder Graphitpulver ein, so kommt es wegen örtlicher Überkonzentrationen leicht zur unvollständiger Oxidreduktion sowie zu Versprödung.

Schließlich gelingt die Reduktion der Oxide mit Kohlenstoff nicht bei den Elementen der dritten Haupt- und Nebengruppen sowie bei Elementen der zweiten Hauptgruppe des Periodischen Systems.

Deshalb wurde bereits vorgeschlagen, sowohl die Entbinderung als auch das Sintern vollkommen unter Luftausschluß durchzuführen. So beschreibt die japanische Patentschrift 64-28 302 die Herstellung von Seltenerdmagneten mit einem Binder aus Paraffinwachs, das bei Temperaturen kleiner als 120 °C erweicht. Die Entbinderung der Grünteile wird unter Vakuum bei Drucken kleiner als 20 Torr oder unter Argon mit einer Heizrate von 2 - 10 °C/min durchgeführt. Sowohl die Entbinderung wie auch das Sintern erfolgen im gleichen Ofen, um das entbinderte hochporöse und damit auch hochreaktive Grünteil nicht den Luft aussetzen zu müssen. Die japanische Patentschrift 64-28 303 beschreibt ebenfalls die Entbinderung und das Sintern von Seltenerdmagneten im gleichen Ofen, wobei die Entbinderung bei einem Vakuum von $10^{-1}$ Torr und einer Heizrate von 2 - 10 °C/min erfolgt. Binder ist dort eine Mischung aus Polystyrol, Paraffinwachs und Calciumstearat im Verhältnis 2 : 2 : 1.

Diese Verfahrensweise birgt jedoch große technische Schwierigkeiten, weil Entbindern und Sintern im gleichen Ofen durchgeführt werden müssen. Sinteröfen sind bezüglich Leistung sowie Meß- und Regeltechnik auf hohe Temperaturen um 1 200 °C und mehr ausgelegt. Die für das Entbindern notwendige sorgfältige Temperaturkontrolle im Bereich von Raumtemperatur bis 300 °C ist damit kaum durchzuführen.

Zudem schlagen sich die Pyrolyseprodukte an der gekühlten Wand sowie in Vakuumrohren nieder und können so im weiteren Betrieb zu Ausfällen führen.

Es bestand somit die Aufgabe, Sinterteile auf der Basis sauerstoffempfindlicher, nicht reduzierbarer Pulver unter Nutzung der Formgebung durch Spritzgießen praxisgerecht herzustellen.

Diese Aufgabe wird erfindungsgemäß durch Verfahren gelöst, wie sie in den Ansprüchen definiert sind. Die bevorzugten Maßnahmen umfassen die Verwendung von oxidschichtfreien Pulvern bzw. die Entfernung der Oxidschicht unter Luft- und Feuchteausschluß, das Compoundieren der Pulver mit dem Binder unter Luft- und Feuchteausschluß, das Spritzgießen und Lagern der Grünteile unter Luft- und Feuchteausschluß, das Entbindern der Teile unter reduzierenden Bedingungen in Argon oder Vakuum in einem getrennten Entbinderungsofen und unter Verwendung einer einfachen Lager- und Transportvorrichtung, die den Transport in den Sinterofen unter einem Schutzgas ermöglicht sowie letztendlich das Sintern im getrennten Sinterofen.

Erfindungsgemäß wird ein Verfahren zur Herstellung von Sinterteilen bereitgestellt, bei dem aus sinterndem Material und Binder bestehende Grünteile durch Entbindern in Rohteile überführt werden und die Rohteile in Abwesenheit von Sauerstoff gesintert werden, wobei nach Entbinderung des Grünteils das Rohteil in einem Behälter, der Sintertemperaturen widersteht (aushält) und derart ausgebildet ist und betrieben wird, daß das Rohteil vor Zutritt von schädlichen Stoffen, insbesondere Sauerstoff, geschützt ist, in einen Sinterofen überführt und in dem Behälter im Sinterofen gesintert wird.

Bevorzugte Ausführungsbeispiele des erfindungsgemäßen Verfahrens beinhalten eines oder mehrere der folgenden Merkmale:

1. Es wird ein Grünteil verwendet, das als zu sinterndes Material ein Sintermaterial aus der Gruppe Mg, Si, Ti, Al, Zr, seltene Erdmetalle, Fe/Si-Legierungen, vorzugsweise Ti, Si, und koerzitive Magnetmaterialien, vorzugsweise Sm\Co oder Fe\Nd\B\Co, und als Binder ein Bindermaterial aus der Gruppe: Polyacetale, Paraffinwachse, Polyolefine, als Polyolefine vorzugsweise Ethylen- und Propylenpolymere enthält.

2. Die Entbinderung des Grünteils erfolgt bereits in dem Behälter.

3. Die Entbinderung geschieht unter Einsatz von einer oder mehreren der folgenden Maßnahmen:

(a) Kontaktieren des Grünteils mit einem fluiden Medium, insbesondere einem Gas, das das Gefüge des Bindermaterials löst, insbesondere das Bindermaterial chemisch zerlegt,

(b) ein- oder mehrfaches Kontaktieren des Grünteils mit Spülgas und Abführen von Spülgas zusammen mit Binder oder Binderbestandteilen,

(c) Durchführung der Entbinderung unter reduzierenden Bedingungen,

(d) Durchführung der Entbinderung unter einem Schutzgas, insbesondere einem Edelgas, vorzugsweise Argon, oder unter Vakuum.

4. Bei der Überführung des Rohteils (*entbinderten Teils*) wird zumindest eine der folgenden Betriebsbedingungen angewandt:

(a) im Inneren des Behälters befindet sich ein Schutzgas, insbesondere ein Edelgas, vorzugsweise Argon,

(b) das Innere des Behälters wird auf einer Temperatur gehalten, die niedriger ist, insbesondere mindestens 5 - 20 C°, vorzugsweise mindestens 5 - 10 C° niedriger ist, als die der den Behälter umgebenden Atmosphäre;

5. Zum bzw. beim Sintern wird eine oder mehrere der folgenden Maßnahmen gegebenenfalls mehrmals hintereinander eingesetzt:

(a) Vorwärmen des Sinterofens;

(b) Beschicken des Sinterofens mit Schutzgas, insbesondere Edelgas, vorzugsweise Argon;

(c) Evakuieren des das Rohteil enthaltenden Sinterofens;

(d) Beschicken des das Rohteil enthaltenden Sinterofens mit Schutzgas, insbesondere Edelgas, vorzugsweise Argon;

6. Die Grünteile werden durch Formen, insbesondere Spritzgießen, eines fließfähigen, Binder und zu sinterndes Material enthaltenden Produkts hergestellt, wobei das fließfähige Produkt vorzugsweise durch Compoundieren von zu sinterndem pulverförmigen Material und Binder unter Sauerstoff- und Feuchtigkeitsausschluß hergestellt wird.

7. Das fließfähige Material wird durch Erwärmen des Binders erzeugt, insbesondere durch Erwärmen eines Gemisches aus Binder und zu sinterndem Material, auf eine Temperatur, bei der der Binder fließfähig ist.

8. Das zu sinternde Material wird von oxidierten Bereichen durch mechanische Reibbehandlung, insbesondere Mahlen, vorzugsweise Attritormahlung, befreit, die dabei abgeriebenen Oxidteile werden gegebenenfalls von den zu sinternden Materialien getrennt, und das zu sinternde Material wird dann ohne weiteren Kontakt mit Sauerstoff oder Feuchtigkeit zu dem fließfähigen Material verarbeitet.

9. Das zu sinternde Material wird einer Attritormahlung in einer organischen Flüssigkeit unterzogen.

Erfindungsgemäß wird ferner ein Keramikbehälter für Sinterteile bereitgestellt, welcher aus einem Aufnahmeteil aus Keramik besteht, das zur Aufnahme eines zu sinternden Teils ausgelegt ist, und einem Verschlußteil aus Keramik, das so ausgebildet ist und mit dem Aufnahmeteil verbunden werden kann, daß das gesamte Teil ein darin befindliches Sinterteil vor Zutritt von Sauerstoff von außen schützt, wobei das Keramikmaterial ein solches ist, das Sintertemperaturen widersteht.

Bevorzugte Ausführungsbeispiele des Keramikbehälters der Erfindung weisen eines oder mehrere der folgenden Merkmale auf:

1. Das Aufnahmeteil und das Verschlußteil sind als Behälter bzw. Deckel ausgebildet, die eine ausreichend genaue Formgebung der miteinander in Kontakt tretenden Oberflächen aufweisen, um Sauerstoffdurchgang zwischen Behälter und Deckel zu vermeiden.

2. Das Aufnahmeteil und das Verschlußteil können mit Hilfe einer aus einem rippenartigen Vorsprung und einer nutartigen Ausnehmung bestehende Verbindung derart verbunden werden, daß der rippenartige Vorsprung in geschlossenen Zustand des Keramikbehälters in die nutartige Ausnehmung unter Abdichtung gegen Sauerstoffzutritt eingreift.

3. Der Keramikbehälter besteht im wesentlichen aus $Al_2O_3t$.

4. In dem Keramikbehälter sind eine oder mehrere offenporöse Unterlagen für das zu sinternde Material, und/oder ein Behälter für ein chemisches Behandlungsmittel, insbesondere ein Entbinderungsmittel, vorzugsweise Oxalsäure, vorhanden, wobei die offenporösen Unterlagen und ggf. auch der Keramikbehälter für das chemische Behandlungsmittel vorzugsweise aus demselben keramischen Material wie der Keramikbehälter bestehen.

Die Erfindung wird im folgenden unter Bezugnahme auf die Zeichnung detailliert beschrieben in der Fig. 1 einen erfindungsgemäßen Keramikbehälter im Querschnitt schematisch zeigt.

Die eingesetzten Pulver werden weitgehend durch Vorsprühen ihrer Schmelzen in einer Schutzgasatmosphäre hergestellt, wobei die einzelnen Verfahrensvarianten hier nicht näher beschreiben werden müssen.

Teilweise ist es möglich, die so hergestellten Pulver in Transportbehältern unter Schutzgas, meist Argon, zu beziehen. In diesem Fall sind die Pulver von vornherein frei von Oxidschichten. Falls die Pulver nicht oxidfrei bezogen werden können, werden sie von ihren Oxidschichten durch eine Attritormahlung in einem wasser- und luftfreien Lösungsmittel befreit. Als Lösungsmittel können im wesentlichen alle hydroxylgruppenfreien Lösungsmittel von Kohlenwasserstoffen wie Hexan, Heptan, Octan, Petrolethergemischen bis zu polaren Lösungsmitteln wie Ketonen und Ethern wie Aceton, Methylethylketon verwendet werden.

Die abgetrennten Oxide werden entweder in der Suspension belassen, z.B. wenn ihr Anteil derart niedrig ist, daß er die späteren Materialeigenschaften nicht nachteilig beeinflußt, oder er wird infolge der Kleineren Partikelgröße der Oxide durch Filtration oder Zentrifugieren von den reinen Metallpulvern abgetrennt.

Gegebenenfalls können der Mischung noch geringe Mengen stark elektronegativer Metalle oder Reduktionsmittel zur Reduktion der Oxide zugesetzt werden wie Magnesium, Calcium oder bevorzugt Lithium, das wegen seiner geringen Dichte leicht vom Ansatz abgetrennt werden kann oder ein mehrkomponentiges Reduktionsmittel mit aktiven Hydridioner wie beispielsweise Lithiumborhydrid, das ebenfalls wegen seiner geringen Dichte sehr leicht abgetrennt werden kann.

Die Vermischung mit dem Binder erfolgt unter Schutzgas, vorzugsweise Argon. Als Mischaggregate können vor allem beheizte Kneter eingesetzt werden, die man mit Argon begast. Wird eine Suspension von Pulver in einem Lösungsmittel eingesetzt, so führt man die Suspension ohne vorherige Lösungsmittelabtrennung in den Kneter ein. Sodann gibt man den Binder hinzu, destilliert das Lösungsmittel unter Erwärmen unter Schutzgas ab und kuetet danach mit dem Binder. Es ist auch möglich, Lösungsmittel zu verwenden, die mit dem Binder mischbar sind, wie beispielsweise Dietylenglykoldimethylether mit Polyacetal bei Temperaturen größer als 150°C. In diesem Fall wird die Vermischung durch eine erniedrigte Viskosität erleichtert. Gegen Ende zieht man das Lösungsmittel im Vakuum ab. Indem man die Temperatur des Kneters unter die Erstarrungstemperatur des Binders erniedrigt, wird die geschmolzene Mischung noch im Kneter unter Inertgas oder Vakuum granuliert und danach unter Inertgas in einen Transportbehälter abgefüllt. Zur Formgebung wird das Spritzgießverfahren eingesetzt.

Der Vorratstrichter und die Plastifiziereinheit der Spritzgußmaschine werden inertisiert, indem man solange Argon in den Vorratstrichter einleitet bis dieser vollsteht. Sodann wird das Granulat eingefüllt und mitgerissene Luft wieder durch Argon verdrängt. Nach der Formgebung sind die Grünteile weit weniger oxidationsempfindlich als die Pulver, weil sie eine weit geringere Oberfläche aufweisen und die Oberfläche der Grünteile nahezu immer von einer durchgehenden Binderschicht überzogen ist.

Am empfindlichsten sind die Materialien nach dem Entbindern, wenn sie einen hochporösen Formkörper bilden. Deshalb wird besonderer Wert darauf gelegt, daß sich das Entbindern und der Transport zum Sinterofen unter Luft- und Feuchteausschuß vollziehen. Hierzu eignet sich in besonderer Weise das in der EP-A-413 231 beschriebene Entbinderungsverfahren, wobei als Binder ein Polyacetal eingesetzt wird, welches schnell unterhalb seiner Erweichungstemperatur unter dem Einfluß einer säurehaltigen Atmosphäre zu Formaldehyd, einem Reduktionsmittel, depolymerisiert wird.

Da die Entbinderung unterhalb der Erweichungstemperatur des Polyacetals abläuft, wird jeglicher Verzug vermieden. Als depolymerisierende Säure wird Oxalsäure, ebenfalls ein Reduktionsmittel, verwendet. Deren Eignung zur Entbinderung ist in DE-A-4314694.5 beschrieben.

Die Entbinderung wird in einem Behälter entsprechend Fig. 1, vorgenommen; mehrere dieser Behälter werden in einem Vakuumtrocknessschrank angeordnet. Der Behälter 1 und der dazugehörige Deckel 2 bestehen aus einem nichtporösen hochtemperaturbeständigen, keramischen Material, vorzugsweise Aluminiumoxid. Behälter und Deckel sind nicht gasdicht miteinander verbunden, der Deckel liegt lose auf dem Behälter. Durch die Verzahnung 3, 4 von Behälter 1 und Deckel 2 ist jedoch gewährleistet, daß ein Gasaustausch zwischen dem Innenraum und der Umgebung nur sehr langsam stattfinden kann. In der Mitte des Behälters befindet sich eine Kleine Schale 5, aus dem gleichen dichten keramischen Material. Die Schale wird mit wenigen Gramm Oxalsäure 7 befüllt. Die zu entbindernden, noch unempfindlichen Teile 6 werden kurz der Luft ausgesetzt und auf grobporösen offenporigen Keramikplatten 8 gelagert, um zu gewährleisten, daß die säurehaltige Atmosphäre auch an die Unterseite der Teile herankommt.

Nach Befüllen der Behälter werden diese in einen Vakuumtrockenschrank überführt. Durch mehrmaliges Evakuieren und Befüllen mit Argon wird die Luft in dem Behälter sowie im gesamten Trockenschrank durch Argon ersetzt. Sodann heizt man den Trockenschrank samt Inhalt auf 110 bis 140°C auf, worauf die Entbinderung abläuft. Die Entbinderung kann sowohl unter Normaldruck als auch unter vermindertem Druck erfolgen. Die Teile werden je nach Pulvergröße mit Geschwindigkeiten vor 1 bis 3 mm Wandstärke pro Stunde entbindert. Nach erfolgter Entbinderung wird der Trockenschrank evakuiert, um den in den Behältern gebildeten Formaldehyd zu entfernen und mit Argon befüllt und unter Argon bei Normaldruck abgekühlt, bevorzugt mit zusätzlicher Wasserkühlung. Wenn die Behälter aus dem Trockenschrank entnommen werden, um sie in den Sinterofen zu überführen, muß unbedingt darauf geachtet werden, daß sie etwas kälter als die Umgebung sind, um zu vermeiden, daß sich das Schutzgas im Innenraum abkühlt, zusammenzieht und dadurch Luft eingesaugt wird. Den Sinterofen hält man aus dem gleichen Grund auf einem etwas höheren Temperaturniveau.

Nach dem Beladen und Schließen des Sinterofens wird dieser mehrmals evakuiert und mit Schutzgas befüllt. Danach werden die für die einzelnen Materialien spezifischen und dem Stand der Technik entsprechenden Sinterbedingungen eingestellt.

Beispiel 1

3 kg Titan-Pulver mit einer Korngröße Kleiner als 22 µm werden in einer Attritormühle, die zur Hälfte mit Stahlkugeln von ca. 2 mm Durchmesser gefüllt ist, unter Petroleumbenzin über 24 h gemahlen.

Das Petroleumbenzin weist einen Siedebereich von 80 - 110°C auf, seine Dichte beträgt 0,70 g/cm$^3$. Danach werden die Mahlkuglen über ein Sieb mit ca. 1 mm Maschenweite vom Mahlgut abgetrennt, wobei das Mahlgut stets mit Petroleumbenzin bedeckt ist. Schließlich wird der Mahlabrieb, der die Titanoxide enthält, über einen Filter mit 2 - 4 µm Porenweite abgetrennt. Dazu wird die Suspension unter Waschen mit Petroleumbenzin auf dem Filter bewegt, um den Abrieb mit dem Oxid möglichst vollständig vom Mahlgut zu entfernen. Der größte Teil des Petroleumbenzins wird vom gereinigten Mahlgut abdekantiert; er kann wiederverwendet werden. Die Ti-Suspension, die vollständig mit Petroleumbenzin bedeckt ist, wird in einen heizbaren, gas- und flüssigkeitsdichten Kneter überführt. Die eingesetzte Masse $m_M$ an Metallpulver wird dabei nach

$$m_M = (mges - \rho L \times Vges)/(1 - \frac{\rho L}{\rho M})$$

errechnet.

mges = Gesamtmasse der Suspension (Metallpulver + Lösungsmittel)
Vges = Gesamtvolumen der Suspension
$\rho$L = Dichte des Lösungsmittels

5

$\rho$M = Dichte des Metallpulvers

Danach wurden 2,8 kg im wesentlichen oxidfreies Titanpulver eingesetzt. In die im Kneter befindliche Suspension wurden 324 g eines Polyoximethylens eindosiert, das ca. 2,5 Mol. -% Butandiolformal als Comonomer enthielt und einen Schmelzindex DIN 53735 von 50 g/10 min. bei 190°C und einer Prüfauflage von 2,16 kg aufwies. Zusätzlich wurde 17 g eines Polyethylens zudosiert, das eine Dichte von 0,918 g/cm$^3$ bei einem Schmelzindex von 30 g/10 min. bei 190°C aufwies.

Der Kneter wurde in einem Argonstrom aufgeheizt und bei Temperaturen um 100°C das Petroleumbenzin abdestilliert. Danach wurde die Masse auf 170 - 180°C geheizt und nach dem Aufschmelzen des Polyacetals ca. 1 h bei 170 - 180°C geknetet. Sodann wurde unter langsamen Kneten abgekühlt und die Masse granuliert. Der Kneterinhalt, die fertige Spritzgießmasse, wurde in einen mit Argon gefüllten Behälter entleert. Der Gehalt an Titan-Pulver betrug 57 Vol. -%. Die Spritzgießmasse wurde anschließend in einer mit Argon inertisierten Spritzgießmaschine zu Zugstäben mit 5,65 mm Schaftdurchmesser verarbeiten. Dazu wurde die Masse bei 180°C aufgeschmolzen und in eine auf 135°C temperierte Form gespritzt. Mehrere der so erhaltenen Grünteile wurden in einem Aluminiumoxidbehälter mit 12 cm Innendurchmesser und inclusive Deckel 30 mm Höhe entsprechend der Beschreibung plaziert. Im Behälter wurden eine kleine Aluminiumoxidschale mit 4 g Oxalsäure beschickt. Der Behälter wurde in einen Vakuumtrockenschrank plaziert.

Der Trockenschrank wurde zweimal nacheinander auf ca. 1 mbar evakuiert und danach mit Argon befüllt. Sodann wurde der Trockenschrank auf 135°C aufgeheizt und 3 Stunden bei dieser Temperatur belassen, während der Trockenschrank mit einem Argonstrom von ca. 50 l/h gespült wurde. Danach wurde der Trockenschrank zweimal auf ca. 1 mbar evakuiert und mit Argon befüllt. Die Heizung wurde abgeschaltet und der Trockenschrank auf 30°C unter Argonspülung abkühlen gelassen. Der Behälter mit den Proben wurde unter einem Warmluftvorhang mit ca. 35 - 40°C entnommen und in den auf 50 - 60°C vorgewärmten Sinterofen plaziert. Der Sinterofen wurde geschlossen, zweimal auf ca. 10$^{-4}$ mbar evakuiert und mit Argon befüllt. Danach wurde auf 10$^{-4}$ mbar evakuiert, der Ofen mit einer Heizrate von 10 C°/min auf 1320°C aufgeheizt, 3 h bei 1320°C belassen und dann abgekühlt. Es wurden Titanteile erhalten, die weniger als 0,05% Kohlenstoff und weniger als 0,1% Sauerstoff enthielten. Ihre Dichte betrug 4,37 g/cm$^3$, also 97% der theoretischen Dichte (4,505 g/cm$^3$).

Beispiel 2

Ein Legierungspulver der Zusammensetzung 66% Fe, 28% Nd, 5% Co, 1% B und einer Korngröße von ca. 10 μm, das zur Herstellung von Seltenerdmagneten geeignet ist, wurde entsprechend Beispiel 1 durch Mahlen in Petroleumbenzin von Oxidanteilen gereinigt und wie dort beschrieben, zu einer Spritzgießmasse verarbeitet, die 56 Vol. -% Metallpulver enthielt. Die Masse wurde wie beschrieben durch Spritzgießen zu Grünteilen verarbeitet, die Grünteile entbindert und nach dem Entbindern die Teile in einen Sinterofen überführt. Der Sinterofen wurde zweimal auf ca. 10$^{-4}$ mbar evakuiert und mit Argon gefüllt. Danach wurde auf 5 x 10$^{-5}$ mbar evakuiert und der Ofen mit 10 C°/min auf 1190°C aufgeheizt. Nach 1 h bei 1190°C wurde der Ofen kontrolliert mit 2 C°/min. auf 850°C abgekühlt, danach wird schneller und unkontrolliert abgekühlt. Die gesinterten Teile enthielten weniger als 0,05% Kohlenstoff und weniger als 0,1% Sauerstoff.

**Patentansprüche**

1. Verfahren zur Herstellung von Sinterteilen, bei dem aus sinterndem Material und Binder bestehende Grünteile durch Entbindern in Rohteile überführt werden und die Rohteile in Abwesenheit von Sauerstoff gesintert werden,
**dadurch gekennzeichnet**, daß nach Entbinderung des Grünteils das Rohteil in einem Behälter, der Sintertemperaturen widersteht (aushält) und derart ausgebildet ist und betrieben wird, daß das Rohteil vor Zutritt von schädlichen Stoffen, insbesondere Sauerstoff, geschützt ist, in einen Sinterofen überführt und in dem Behälter im Sinterofen gesintert wird.

2. Verfahren nach Anspruch 1, dadurch gekennzeichnet, daß ein Grünteil verwendet wird, das:
(a) als zu sinterndes Material ein Sintermaterial aus der Gruppe Mg, Si, Ti, Al, Zr, seltene Erdmetalle, Fe/Si-Legierungen, vorzugsweise Ti, Si, und koerzitive Magnetmaterialien, vorzugsweise Sm\Co oder Fe\Nd\B\Co,
(b) als Binder ein Bindermaterial aus der Gruppe: Polyacetale, Paraffinwachse, Polyolefine, als Polyolefine vorzugsweise Ethylen- und Propylenpolymere enthält.

3. Verfahren nach Anspruch 1 oder 2, dadurch gekennzeichnet, daß die Entbinderung des Grünteils bereits in dem Behälter erfolgt.

4. Verfahren nach einem der vorhergehenden Ansprüche, dadurch gekennzeichnet, daß die Entbinderung unter Einsatz einer oder mehreren der folgenden Maßnahmen geschieht:
   (a) Kontaktieren des Grünteils mit einem fluiden Medium, insbesondere einem Gas, das das Gefüge des Bindermaterials löst, insbesondere das Bindermaterial chemisch zerlegt,
   (b) ein- oder mehrfaches Kontaktieren des Grünteils mit Spülgas und Abführen von Spülgas zusammen mit Binder oder Binderbestandteilen,
   (c) Durchführung der Entbinderung unter reduzierenden Bedingungen,
   (d) Durchführung der Entbinderung unter einem Schutzgas, insbesondere einem Edelgas, vorzugsweise Argon, oder unter Vakuum.

5. Verfahren nach einem der vorhergehenden Ansprüche, dadurch gekennzeichnet, daß bei der Überführung des Rohteils (*entbinderten Teils*) zumindest eine der folgenden Betriebsbedingungen angewandt wird:
   (a) im Inneren des Behälters befindet sich ein Schutzgas, insbesondere ein Edelgas, vorzugsweise Argon,
   (b) das Innere des Behälters wird auf einer Temperatur gehalten, die niedriger ist, insbesondere mindestens 5 - 20 C°, vorzugsweise mindestens 5 - 10 C° niedriger ist, als die der den Behälter umgebenden Atmosphäre;

6. Verfahren nach einem der vorhergehenden Ansprüche, dadurch gekennzeichnet, daß zum bzw. beim Sintern eine oder mehrere der folgenden Maßnahmen gegebenenfalls mehrmals hintereinander eingesetzt wird:
   (a) Vorwärmen des Sinterofens;
   (b) Beschicken des Sinterofens mit Schutzgas, insbesondere Edelgas, vorzugsweise Argon;
   (c) Evakuieren des das Rohteil enthaltenden Sinterofens;
   (d) Beschicken des das Rohteil enthaltenden Sinterofens mit Schutzgas, insbesondere Edelgas, vorzugsweise Argon;

7. Verfahren nach einem der vorhergehenden Ansprüche, dadurch gekennzeichnet, daß die Grünteile durch Formen, insbesondere Spritzgießen, eines fließfähigen, Binder und zu sinterndes Material enthaltenden Produkts hergestellt werden, wobei das fließfähige Produkt vorzugsweise durch Compoundieren von zu sinterndem pulverförmigen Material und Binder unter Sauerstoff- und Feuchtigkeitsausschluß hergestellt wird.

8. Verfahren nach einem der vorhergehenden Ansprüche, dadurch gekennzeichnet, daß das fließfähige Material erzeugt wird durch Erwärmen des Binders, insbesondere durch Erwärmen eines Gemisches aus Binder und zu sinterndem Material, auf eine Temperatur, bei der der Binder fließfähig ist.

9. Verfahren nach einem der Ansprüche 7 oder 8, dadurch gekennzeichnet, daß das zu sinternde Material von oxidierten Bereichen durch mechanische Reibbehandlung, insbesondere Mahlen, vorzugsweise Attritormahlung, befreit wird, die dabei abgeriebenen Oxidteile gegebenenfalls von den zu sinternden Materialien getrennt werden, und das zu sinternde Material dann ohne weiteren Kontakt mit Sauerstoff oder Feuchtigkeit zu dem fließfähigen Material verarbeitet wird.

10. Verfahren nach Anspruch 9, dadurch gekennzeichnet, daß das zu sinternde Material einer Attritormahlung in einer organischen Flüssigkeit unterzogen wird.

11. Keramikbehälter für Sinterteile bestehend aus einem Aufnahmeteil aus Keramik, das zur Aufnahme eines zu sinternden Teils ausgelegt ist,
   und einem Verschlußteil aus Keramik, das so ausgebildet ist und mit dem Aufnahmeteil verbunden werden kann, daß das gesamte Teil ein darin befindliches Sinterteil vor Zutritt von Sauerstoff von außen schützt,
   wobei das Keramikmaterial ein solches ist, das Sintertemperaturen widersteht.

**12.** Keramikbehälter nach Anspruch 11, dadurch gekennzeichnet, daß das Aufnahmeteil und Verschlußteil als Behälter bzw. Deckel ausgebildet sind, die eine ausreichend genaue Formgebung der miteinander in Kontakt tretenden Oberflächen aufweisen, um Sauerstoffdurchgang zwischen Behälter und Deckel zu vermeiden.

**13.** Keramikbehälter nach Ansprüchen 11 oder 12, dadurch gekennzeichnet, daß Aufnahmeteil und Verschlußteil mit Hilfe einer aus einem rippenartigen Vorsprung und einer nutartigen Ausnehmung bestehende Verbindung derart verbunden werden können, daß der rippenartige Vorsprung in geschlossenen Zustand des Keramikbehälters in die nutartige Ausnehmung unter Abdichtung gegen Sauerstoffzutritt eingreift.

**14.** Keramikbehälter nach einem der auf Keramikbehälter gerichteten Ansprüche, dadurch gekennzeichnet, daß es im wesentlichen aus $Al_2O_3$ besteht.

**15.** Keramikbehälter nach einer der Ansprüche 11 bis 14, dadurch gekennzeichnet, daß in dem Keramikbehälter eine oder mehrere offenporöse Unterlagen für das zu sinternde Material, und/oder ein Behälter für ein chemisches Behandlungsmittel, insbesondere ein Entbinderungsmittel, vorzugsweise Oxalsäure, vorhanden ist, wobei die offenporöse Unterlagen und ggf. auch der Keramikbehälter für das chemische Behandlungsmittel vorzugsweise aus demselben keramischen Material wie der Keramikbehälter bestehen.

**Europäisches Patentamt**

# EUROPÄISCHER RECHERCHENBERICHT

Nummer der Anmeldung

EP 95 10 3494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 917 859 (HAMO KAZUNORI) 17.April 1990 <br> * Spalte 2, Zeile 56 - Spalte 3, Zeile 44; Beispiel 1 * | 1-6 | B22F3/10 <br> B22F3/22 |
| Y | | 11-15 | |
| | --- | | |
| X | EP-A-0 524 438 (CORNING INC) 27.Januar 1993 <br> * Seite 4, Zeile 2 - Seite 6, Zeile 28; Ansprüche 1,2; Beispiel 1 * | 1-6 | |
| Y | | 11-15 | |
| | --- | | |
| X | US-A-3 708 285 (SCHEYER G) 2.Januar 1973 <br> * Spalte 5, Zeile 10 - Spalte 6, Zeile 8; Anspruch 3 * | 1,3-6 | |
| | --- | | |
| A | EP-A-0 329 475 (SANYO CHEMICAL IND LTD) 23.August 1989 <br> * Seite 7, Zeile 40 - Seite 9, Zeile 6 * <br> ----- | 7,8 | |
| | | | **RECHERCHIERTE SACHGEBIETE (Int.Cl.6)** <br><br> B22F |

Der vorliegende Recherchenbericht wurde für alle Patentansprüche erstellt

| Recherchenort | Abschlußdatum der Recherche | Prüfer |
|---|---|---|
| DEN HAAG | 29.Juni 1995 | Schruers, H |